# EUROPÄISCHE PATENTSCHRIFT

(11) **EP 1 940 572 B1**
(45) Veröffentlichungstag und Bekanntmachung des Hinweises auf die Patenterteilung: **22.07.2009**
(21) Anmeldenummer: 06792380.5
(22) Anmeldetag: 05.10.2006
(51) Int. Cl.: B22D 11/128, C21D 9/00, F27D 3/02, B21B 39/00

(54) **STRANGFÜHRUNGSROLLE**
STRAND GUIDING ROLLER
GALET DE GUIDADE DE BARRE

(30) Priorität: 24.10.2005 AT 17322005
(43) Veröffentlichungstag der Anmeldung: 09.07.2008
(73) Patentinhaber: Siemens VAI Metals Technologies GmbH & Co, 4031 Linz (AT)
(72) Erfinder: DEIBL, Günther, A-4060 Leonding (AT); GUTTENBRUNNER, Josef, A-4522 Sierning (AT); STARRERMAIR, Thomas, A-4407 Dietach (AT)
(74) Vertreter: Maier, Daniel Oliver
(86) Internationale Anmeldenummer: PCT/EP2006/009631
(87) Internationale Veröffentlichungsnummer: WO 2007/048489

(56) Entgegenhaltungen:
- DE-A1- 2 546 723
- DE-A1- 3 503 344
- DE-A1- 4 114 842
- DE-U1- 20 021 514
- US-A- 5 649 889

## Beschreibung

Die Erfindung betrifft eine Strangführungsrolle mit einer durchgehenden zentralen Welle und mit mindestens zwei Rollenmänteln, wobei die zentrale Welle in mindestens drei Wälzlagern drehbar gelagert abgestützt ist und wobei jeder Rollenmantel zwischen zwei Wälzlagern drehfest auf der zentralen Welle angeordnet ist.

In Stranggießanlagen zum Gießen von Metallsträngen mit großer Strangbreite (Brammen- und Dünnbrammen) werden zum Stützen und Führen des Metallstranges nach dem Verlassen der Stranggießkokille Strangführungsrollen eingesetzt, die mehrfach gelagert und in einer Stützkonstruktion eines Strangführungsgerüstes oder eines Strangführungssegmentes abgestützt sind.

Im Speziellen betrifft die Erfindung eine mehrfach gelagerte Strangführungsrolle für Stahlstrang-Gießanlagen zum Gießen von Strängen mit Brammen- oder Dünnbrammenquerschnitt. Die Strangführungsrolle umfasst in einer mathematischen Betrachtung n Rollenmäntel, mit n≥2, und m Stützlager, mit m=n+1.

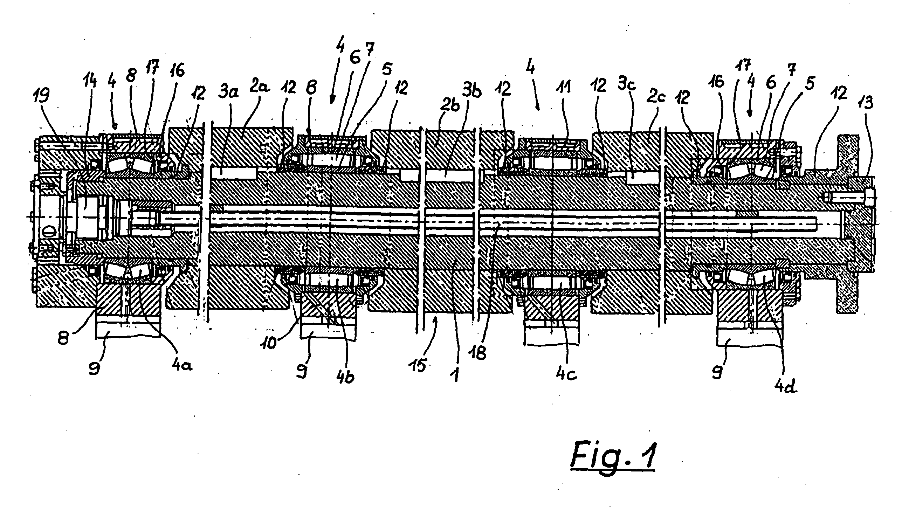

Mehrfach gelagerte Strangführungsrollen mit einer zentralen durchgehenden und drehbaren Welle gehören bei Stranggießanlagen zur üblichen Ausrüstung. Aus der US-A 5,649,889 ist beispielsweise eine vierfach gelagerte Strangführungsrolle bekannt, bei der eine zentrale Welle in vier Wälzlagern drehbar abgestützt ist. Eine dieser Lagerstellen (Position Y in Figur 1 der US -A 5,649,889) ist als Festlager ausgebildet. Dadurch wird die Strangführungsrolle in eine linke und eine rechte Hälfte unterteilt, die jeweils in diesen Bereichen durch den heißen Metallstrang auftretende thermische Dehnungen aufzunehmen können. Die einzelnen Rollenmäntel sind über Keilverbindungen mit der zentralen Welle drehfest verbunden. Durch die Festlegung eines definierten Festlagers ist die Richtung der Ausweichbewegung zum Ausgleich der Wärmedehnungen vorgegeben. Bei Blockaden, beispielsweise durch Verschmutzungen, kann dies in Einzelfällen zu unerwünschten zusätzlichen Axialkräften führen. Axial ausgerichtete Dehnungsbolzen und axiale Rückstellkräfte aufbringende Federpakete komplizieren zusätzlich den konstruktiven Aufbau der Strangführungsrolle.

Auch aus der DE 200 21 514 U1 und der DE 25 46 723 A sind mehrfach gelagerte Strangführungsrollen mit einem Festlager und mehreren Loslagern bekannt.

Aus der AT-B 337 383 ist ebenfalls eine mehrfach gelagerte, einteilige Strangführungsrolle bekannt, bei der die Lagerstellen durch Einstiche in den Rollenkörper gebildet sind. Von den notwendigerweise geteilten Lagern ist eines der außen liegenden Lager als Festlager gestaltet. Dadurch ergibt sich eine asymmetrische Rollenkonstruktion und ein asymmetrischer Dehnungsausgleich. Die hohen Radialbelastungen aus dem Stranggewicht und aus Antriebsmomenten können Beeinträchtigungen des Dehnungsausgleiches auftreten, die die Lebensdauer der Strangführungsrolle reduzieren.

Aus der US-A 4,164,252 (DE-A 27 54 952) ist ebenfalls eine mehrfach in Wälzlagern gelagerte Strangführungsrolle bekannt, bei der diese durch ein randseitig gelegenes Festlager in der Strangführung positioniert ist. Hier kann ebenfalls durch eine Überlagerung von Axialkräften und Dehnungskräften eine unerwünscht hohe Lagerbelastung auftreten.

Der vorliegenden Erfindung liegt daher die Aufgabe zugrunde, die Nachteile des bekannten Standes der Technik zu vermeiden und eine Strangführungsrolle vorzuschlagen, bei der Verspannungen in der Rollenkonstruktion infolge der thermischen und mechanischen Belastungen durch den heißen Metallstrang weitgehend vermieden werden und die Lebensdauer der Strangführungsrolle gesteigert wird.

Diese Aufgabe wird ausgehend von einer Strangführungsrolle der eingangs beschriebenen Art dadurch gelöst, dass die Strangführungsrolle mit den Wälzlagern schwimmend und in ihrer Gesamtheit eine Axialverschiebung zulassend in festliegenden Lagergehäusen abgestützt ist. Der wesentliche Vorteil dieser Konstruktion besteht darin, dass die Strangführungsrolle in ihrer Gesamtheit in Achsrichtung verschiebbar abgestützt ist und daher unabhängig von örtlich auftretenden Blockadestellen stets eine axiale Ausweichbewegung möglich ist. Damit wird eine Summierung von Axialkräften, die einerseits durch den Strangtransport und andererseits durch Wärmedehnungen der Strangführungsrolle hervorgerufen werden, konsequent vermieden.

Die verwendeten Wälzlager entsprechen handelsüblichen Baureihen, wie sie von Lagerherstellern angeboten werden. Jedes Wälzlager umfasst zumindest einen Innenring, einen Außenring und zwischen dem Außenring und dem Innenring verteilt angeordnete Wälzkörper. Gegebenenfalls sind die Wälzkörper in einem Rollenkäfig in ihrer Lage zueinander festgelegt. Die Innenringen der Wälzlager bilden mit der zentralen Welle und mit den Rollenmänteln der Strangführungsrolle und gegebenenfalls weiteren Zwischenringen eine in axialer Richtung verspannte Einheit und diese verspannte Einheit ist in den Lagergehäusen der Wälzlager in axialer Richtung verschiebbar angeordnet.

Für die in axialer Richtung (Richtung der Drehachse der Strangführungsrolle) verspannte Einheit ergeben sich im Wesentlichen zwei Bewegungsmöglichkeiten: Einerseits kann das Wälzlager als ein Bauteil, bestehend aus Innenring, Außenring und Wälzkörper, im umgebenden Lagergehäuse axial verschiebbar eingepasst sein; andererseits besteht die Möglichkeit Wälzlager zu verwenden, bei denen der Außenring, der Innenring und die Wälzkörper so aufeinander abgestimmt sind, dass der Außenring zum Innenring einen begrenzten Verschiebeweg in axialer Richtung zulässt.

Mögliche zweckmäßige Ausgestaltungsformen der Strangführungsrolle, die eine axiale Verschiebebewegung der verspannten Einheit zulassen, bestehen dementsprechend darin, dass
a) zumindest eines der Wälzlager in dem zugeordneten Lagergehäuse in axialer Richtung verschiebbar angeordnet ist,
b) die Wälzlagerkomponenten Außenring, Innenring und Wälzkörper von mindestens einem der Wälzlager zueinander eine begrenzte Verschiebung in axialer Richtung zulassen (z.B. Toroidallager),
c) mindestens eines der Wälzlager die Bedingung a) und mindestens eines der Wälzlager die Bedingung b) erfüllt.

Die freie axiale Verschiebbarkeit der verspannten Einheit der Strangführungsrolle ist dadurch eingeschränkt, dass eine nach innen gerichtete Verschiebemöglichkeit der außen liegenden oder randseitig angeordneten Wälzlager durch Anschläge begrenzt ist. Damit wird von jedem dieser randseitig angeordneten Wälzlager eine einseitige Festlagerfunktion wahrgenommen. Speziell bei Wälzlagern, die eine begrenzte Axialverschiebung des Außenringes zum Innenring zulassen, muss die freie axiale Verschiebbarkeit der verspannten Einheit der Strangführungsrolle auf die zulässige Axialverschiebbarkeit im jeweiligen Wälzlager abgestimmt werden.

Vorzugsweise sind die außen liegenden Wälzlager der Strangführungsrolle von Pendelrollenlager gebildet.

Die innen liegenden Wälzlager sind vorzugsweise von Toroidallagern gebildet. Diese Lagerbauart ermöglicht eine ausreichende axiale Bewegungsfreiheit des Außenringes relativ zum Innenring. Zusätzlich können Toroidallager Fluchtungsfehler, die sich aus dem Strangführungsgerüst ableiten (Fertigungsungenauigkeiten, thermisch bedingte Dehnungen), weitgehend ausgleichen, zusätzlich weisen sie eine höhere Belastbarkeit auf als Pendelrollenlager.

Weitere Vorteile und Merkmale der vorliegenden Erfindung ergeben sich aus der nachfolgenden Beschreibung eines den Schutzumfang nicht einschränkenden Ausführungsbeispieles.

In der einzigen Figurendarstellung (Fig.1) ist eine vierfach gelagerte Strangführungsrolle schematisch dargestellt, wie sie in einer Stranggießanlage zum Gießen eines Stahlstranges mit einer Strangbreite von etwa 1500 mm verwendet wird.

Die Strangführungsrolle besteht aus einer durchgehenden zentralen Welle 1 und drei zueinander fluchtenden Rollenmäntel 2a, 2b, 2c, die mit Passfedern 3a, 3b, 3c auf der zentralen Welle 1 drehfest angeordnet sind. Zwischen benachbarten Rollenmänteln 2a, 2b und 2b, 2c und in den Endbereichen der zentralen Welle 1 ist diese in Wälzlagern 4 abgestützt, wobei die außen liegenden Wälzlager von einem zweireihigen Pendelrollenlager 4a, 4d und die innen liegenden Wälzlager von Toroidallagern 4b, 4c gebildet sind. Jedes Lager besteht in seinem grundsätzlich bekannten Aufbau aus einem Innenring 5, einem Außenring 6 und einer Vielzahl von Wälzkörpern 7, die gegebenenfalls in einem nicht dargestellten Rollenkäfig in ihrer Lage zueinander festgelegt sind. Jedes dieser Wälzlager 4 ist von einem Lagergehäuse 8 umgeben und nach Außen abgedichtet. Die Lagergehäuse sind auf der Stützkonstruktion 9 des Strangführungsgerüstes oder eines Segmentrahmens eines Strangführungssegmentes lösbar befestigt und über diese Stützkonstruktion mit einer Lagerschmierung 10 und/oder Lagergehäusekühlung 11 verbunden.

Die Innenringe 5 der einzelnen Wälzlager 4, daran anschließende Lagerdichtungen tragende Distanzhülsen 12 und die Rollenmäntel 2a, 2b, 2c sind zwischen einer Spannplatte 13 und einer Spannschraube 14 zu einer in axialer Richtung verspannten Einheit 15 verbunden. Die Spannplatte 13 ist an einer Stirnseite der zentralen Welle 1 mit Schrauben fixiert und verschließt gleichzeitig einen zentralen Kühlmittelkanal der Rolleninnenkühlung. Die Spannschraube 14 ist am gegenüber liegenden Ende der zentralen Welle1 auf einem Gewindezapfen der zentralen Welle aufgeschraubt und gesichert. Die in dieser Weise verspannte Einheit 15 ist innerhalb der feststehenden Lagergehäuse 8 schwimmend und damit eine Axialverschiebung zulassend angeordnet.

Die innen liegenden Toroidallager 4b, 4c sind durch die konstruktive Gestaltung der Kontur der Wälzkörper 7 und der Gegenkonturen der Laufflächen am Innenring 5 und Außenring 6 in der Lage, Axialverschiebungen in einem ausreichenden Maß aufzunehmen, um auftretenden Axialkräfte wirksam abzufangen und zu reduzieren. Bei den beiden außen liegenden bzw. randseitigen Radialrollenlagern 4a, 4d ist jeweils der Außenring 6 im Lagergehäuse 8 axial verschiebbar angeordnet, wobei eine nach innen, in Richtung zu den Toroidallagern 4b, 4c gerichtete Axialbewegung, durch Anschläge 16 begrenzt ist. Diese Anschläge 16 sind von Stirnseitenflächen 17 im Lagergehäuse 8 gebildet, an denen der Außenring 6 des jeweiligen Radialrollenlagers 4a, 4d aufläuft. Damit kann die Strangführungsrolle in ihrer Gesamtheit, soweit deren Bauteile die verspannte Einheit 15 bilden, eine freie, allerdings begrenzte axiale Bewegung in beiden Richtungen durchführen. Der zulässige Verschiebeweg beträgt etwa 10 bis 12 mm, wobei bis zu 16 mm möglich wären, und hängt von den zulässigen Grenzwerten der Toroidallager ab und variiert entsprechend der Rollentemperatur.

Die zentrale Welle 1 weist eine Innenkühlung 18 auf. Die Kühlmittelzufuhr und -abfuhr erfolgt über eine stirnseitige Dreheinführung 19, die auch in die zentrale Welle der Strangführungsrolle integriert sein kann. Es ist durchaus möglich, die Kühlmittelleitungen auch durch den Rollenmantel zu führen, um eine intensive Rollenmantelkühlung zu erreichen.

## Patentansprüche

1. Strangführungsrolle mit einer durchgehenden zentralen Welle (1) und mit mindestens zwei Rollenmänteln (2a, 2b, 2c), wobei die zentrale Welle in mindestens drei Wälzlagern (4) drehbar gelagert abgestützt ist und wobei jeder Rollenmantel zwischen zwei Wälzlagern drehfest auf der zentralen Welle angeordnet ist, **dadurch gekennzeichnet, dass** die Strangführungsrolle mit den Wälzlagern (4) schwimmend und in ihrer Gesamtheit eine Axialverschiebung zulassend in festliegenden Lagergehäusen (8) abgestützt ist.

2. Strangführungsrolle nach Anspruch 1, wobei jedes Wälzlager zumindest einen Innenring (5), einen Außenring (6) und zwischen dem Innenring und dem Außenring verteilt angeordnete Wälzkörper (7) umfasst, **dadurch gekennzeichnet, dass** die Innenringe (5) der Wälzlager (4) mit der zentralen Welle (1) und den Rollenmänteln (2a, 2b, 2c) eine in axialer Richtung verspannte Einheit (15) bilden und diese Einheit in den Lagergehäusen (8) in axialer Richtung verschiebbar angeordnet ist.

3. Strangführungsrolle nach Anspruch 2, **dadurch gekennzeichnet, dass** die in axialer Richtung verspannte Einheit (15) eine der folgenden konstruktiven Ausgestaltungen aufweist, die eine Bewegungsmöglichkeiten in axialer Richtung zulässt:
a) zumindest eines der Wälzlager (4a, 4d) ist in dem zugeordneten Lagergehäuse (8) in axialer Richtung verschiebbar angeordnet,
b) die Wälzlagerkomponenten Außenring (5), Innenring (6) und Wälzkörper (7) von mindestens einem der Wälzlager (4b, 4c) lassen zueinander eine begrenzte Verschiebung in axialer Richtung zu,
c) mindestens eines der Wälzlager (4) erfüllt die Bedingung a) und mindestens eines der Wälzlager (4) erfüllt die Bedingung b).

4. Strangführungsrolle nach einem der vorhergehenden Ansprüche, **dadurch gekennzeichnet, dass** eine nach innen gerichtete Verschiebemöglichkeit der außen liegenden Wälzlager (4a, 4d) durch Anschläge (16) begrenzt ist.

5. Strangführungsrolle nach einem der vorhergehenden Ansprüche, **dadurch gekennzeichnet, dass** die außen liegenden Wälzlager (4a, 4b) von Pendelrollenlagern gebildet sind.

6. Strangführungsrolle nach einem der vorhergehenden Ansprüche 1 bis 4, **dadurch gekennzeichnet, dass** die innen liegenden Wälzlager (4b, 4c)von Toroidallagern gebildet sind.

## Claims

1. Strand guiding roller with a continuous central shaft (1) and with at least two roller shells (2a, 2b, 2c), the central shaft being supported by being rotatably mounted in at least three rolling-contact bearings (4) and each roller shell being arranged in a rotationally fixed manner on the central shaft between two rolling-contact bearings, **characterized in that** the strand guiding roller is supported with the rolling-contact bearings (4) in a floating manner and allowing in their entirety axial displacement in fixed bearing housings (8).

2. Strand guiding roller according to Claim 1, each rolling-contact bearing comprising at least one inner ring (5), an outer ring (6) and rolling-contact bodies (7) which are arranged distributed between the inner ring and the outer ring, **characterized in that** the inner rings (5) of the rolling-contact bearings (4) form with the central shaft (1) and the roller shells (2a, 2b, 2c) a unit (15) which is tensioned in the axial direction and this unit is arranged in the bearing housings (8) so as to be displaceable in the axial direction.

3. Strand guiding roller according to Claim 2, **characterized in that** the unit (15) which is tensioned in the axial direction has one of the following designs which allows possibilities for movement in the axial direction:
a) at least one of the rolling-contact bearings (4a, 4d) is arranged in the associated bearing housing (8) so as to be displaceable in the axial direction,
b) the rolling-contact bearing components outer ring (5), inner ring (6) and rolling-contact body (7) of at least one of the rolling-contact bearings (4b, 4c) allow relative to one another limited displacement in the axial direction,
c) at least one of the rolling-contact bearings (4) satisfies condition a) and at least one of the rolling-contact bearings (4) satisfies condition b).

4. Strand guiding roller according to one of the preceding claims, **characterized in that** a possibility for inwardly directed displacement of the outer rolling-contact bearings (4a, 4d) is limited by stops (16).

5. Strand guiding roller according to one of the preceding claims, **characterized in that** the outer rolling-contact bearings (4a, 4b) are formed by spherical roller bearings.

6. Strand guiding roller according to one of the preceding Claims 1 to 4, **characterized in that** the inner rolling-contact bearings (4b, 4c) are formed by toroidal bearings.

## Revendications

1. Galet de guidage de barre, comprenant un arbre central continu (1) et au moins deux enveloppes de galet (2a, 2b, 2c), l'arbre central étant supporté sur paliers à rotation dans au moins trois paliers à roulement (4) et chaque enveloppe de rouleau étant disposée entre deux paliers à roulement de manière solidaire en rotation sur l'arbre central, **caractérisé en ce que** le galet de guidage de barre est supporté avec les paliers à roulement (4) de manière flottante et en permettant dans leur totalité un coulissement axial dans des boîtiers de palier fixes (8).

2. Galet de guidage de barre selon la revendication 1, chaque palier à roulement comprenant au moins une bague interne (5), une barre externe (6) et des corps de roulement (7) répartis entre la bague interne et la bague externe, **caractérisé en ce que** les bagues internes (5) des paliers à roulement (4) forment avec l'arbre central (1) et les enveloppes de galet (2a, 2b, 2c) une unité (15) serrée dans la direction axiale, et cette unité étant disposée de manière à pouvoir coulisser dans la direction axiale dans les boîtiers de palier (8).

3. Galet de guidage de barre selon la revendication 2, **caractérisé en ce que** l'unité (15) serrée dans la direction axiale présente l'une des configurations constructives suivantes, qui permet une possibilité de mouvement dans la direction axiale :
a) au moines l'un des paliers à roulement (4a, 4d) est disposé de manière à pouvoir coulisser dans la direction axiale dans le boîtier de palier (8) associé,
b) les composants du palier à roulement, la bague externe (6), la bague interne (5) et les corps de roulement (7) d'au moins l'un des paliers à roulement (4b, 4c) permettent un coulissement limité relatif dans la direction axiale,
c) au moins l'un des paliers à roulement (4) satisfait la condition a) et au moins l'un des paliers à roulement (4) satisfait la condition b).

4. Galet de guidage de barre selon l'une quelconque des revendications précédentes, **caractérisé en ce qu'**une possibilité de coulissement orientée vers l'intérieur des paliers à roulement situés à l'extérieur (4a, 4d) est limitée par des butées (16).

5. Galet de guidage de barre selon l'une quelconque des revendications précédentes, **caractérisé en ce que** les paliers à roulement situés à l'extérieur (4a, 4b) sont formés par des roulements à rouleaux articulés.

6. Galet de guidage de barre selon l'une quelconque des revendications précédentes 1 à 4, **caractérisé en ce que** les paliers à roulement situés à l'intérieur (4b, 4c) sont formés par des paliers toroïdaux.
